## Europäisches Patentamt
## European Patent Office
## Office européen des brevets

(11) Veröffentlichungsnummer: **0 091 608**
**B1**

(12) **EUROPÄISCHE PATENTSCHRIFT**

(45) Veröffentlichungstag der Patentschrift:
29.06.88

(51) Int. Cl.⁴: **G 05 G 9/18**

(21) Anmeldenummer: **83103153.9**

(22) Anmeldetag: **30.03.83**

(54) Entkopplungsvorrichtung für Schaltgestänge.

(30) Priorität: **14.04.82 DE 3213662**

(43) Veröffentlichungstag der Anmeldung:
**19.10.83 Patentblatt 83/42**

(45) Bekanntmachung des Hinweises auf die Patenterteilung:
**29.06.88 Patentblatt 88/26**

(84) Benannte Vertragsstaaten:
**DE FR GB IT SE**

(56) Entgegenhaltungen:
**DE-A-2 206 715**

**PATENTS ABSTRACTS OF JAPAN, Band 2, Nr. 39, 5. März 1978, Seite 8145 M 77; & JP - A - 52 155 729**

(73) Patentinhaber: **Adam Opel Aktiengesellschaft, Bahnhofsplatz 1 Postfach 1560, D-6090 Rüsselsheim (DE)**

(72) Erfinder: **Leuer, Karl- Rudi, Dipl.- Ing., Ulmenstrasse 7, D-6090 Rüsselsheim (DE)**

(74) Vertreter: **Elbert, Karl, Dipl.- Ing., Adam Opel Aktiengesellschaft Bahnhofplatz 1 Postfach 17 10, D-6090 Rüsselsheim (DE)**

EP 0 091 608 B1

## Beschreibung

Die Erfindung betrifft eine Entkopplungsvorrichtung für Gestänge, insbesondere für das zwischen Getriebe und Schalthebel eines Kraftfahrzeuges angeordnete Schaltgestänge, mit einem senkrecht zur Längsachse des Gestänges bewegbaren Entkopplungselement, das an den in einem Rohrstück gelagerten, ineinandergreifenden Enden zweier drehbaren und axial verschiebbaren Schaltstangen angeordnet ist und eine Hin- und Herbewegung der entkoppelten Schaltstange zuläßt.

Wird aus Platzersparnisgründen der Motor- und Getriebeblock eines Kraftfahrzeuges quer zur Längsachse des Fahrzeuges angeordnet, so besteht die Gefahr des Gangspringens. Durch Fahrbahnanregung und aufgebrachtes Motordrehmoment werden Drehbewegungen des querliegenden Motor- und Getriebeblocks um seine Längsachse erzeugt und das Schaltgestänge dadurch derart in Schwingungen versetzt, daß Antriebsblock und Schaltgestänge gegeneinander schwingen. Dies kann bei entsprechend großen Schwingungsamplituden zum selbsttätigen Ausschalten des gerade eingelegten Ganges führen.

Durch die DE-OS 22 06 715 ist ein Gangwahlmechanismus für ein Fahrzeug bekannt, der eine Koppel zur Kopplung an einem Ende mit einem Gangwahlhebel des Fahrzeuges und zur Kopplung am anderen Ende mit einem Getriebe des Fahrzeuges aufweist. Die Koppel überträgt im Betrieb Bewegungen des Hebels auf das Getriebe zur Betätigung des Getriebes, wobei die Koppel ein erstes und ein zweites Teil zur Bewegbarkeit relativ zueinander aufweist, und zum Mechanismus ferner eine Sperreinrichtung gehört, die selektiv entweder zum Verbinden des ersten und des zweiten Teils miteinander zur Bewegungsübertragbarkeit durch die Koppel oder zu Lösen des ersten und des zweiten Teils voneinander zur Relativbewegbarkeit betätigbar ist. Bei Relativbewegbarkeit überträgt die Koppel die Bewegung des Hebels nicht auf das Getriebe. Die Sperreinrichtung wird von Hand aus dem Fahrrad des Fahrzeuges durch den Zündschalter betätigt.

Durch die Sperreinrichtung des bekannten Mechanismus soll ein Wegfahren des Fahrzeuges durch einen Unbefugten auf ein Minimum reduziert werden. Der Unbefugte kann zwar den Motor des Fahrzeuges anlassen, wenn er den elektrischen Schalter kurzschließt, er kann aber mit dem Fahrzeug nicht wegfahren, da das Getriebe im Leerlauf bleibt, wenn der Schalthebel bewegt wird. Es handelt sich bei dem bekannten Mechanismus um eine Diebstahlsicherung, die in das Schaltgestänge eingebaut ist. Durch die Erfindung soll aber ein Gangspringen verhindert werden, das nur dann auftreten kann, wenn das Kraftfahrzeug fährt und ein Gang eingeschaltet ist, nicht dagegen im Leerlauf.

Aufgabe der Erfindung ist es also, eine aus wenigen und einfach gestalteten Einzelteilen bestehende, platzsparende Entkopplungsvorrichtung zu schaffen, die das Gangspringen wirksam verhindert. Dies wird gemäß der Erfindung auf vorteilhafte Weise dadurch erreicht, daß zwischen den beiden drehfest miteinander verbundenen Enden der Schaltstangen ein den Entkopplungsvorgang steuerndes, in axialer Richtung sowie in Richtung seiner Längsachse verschiebbares und an seinem einen Ende mit der Innenfläche des Rohrstückes zusammenwirkendes Zwischenstück vorgesehen ist, in das das mit einer Vertiefung in der vom Schalthebel betätigten Schaltstange zusammenwirkende Entkopplungselement eingesetzt ist, wobei das Entkopplungselement durch eine Bewegung quer zur Längsachse des Zwischenstückes beim Verschieben der Schaltstange aus dem entkoppelten Zustand in axialer Richtung und relativ zum Zwischenstück eine Kopplung der Enden der beiden Schaltstangen in axialer Richtung bewirkt.

Das erfindungsgemäße Zwischenstück ermöglicht einen einfachen und platzsparenden Aufbau der Entkopplungsvorrichtung und gewährleisten eine hohe Betriebssicherheit, eine kostengünstige Fertigung und Montage sowie eine lange Lebensdauer.

Eine vorteilhafte Weiterbildung der Erfindung besteht darin, daß das Ende der vom Schalthebel betätigten Schaltstange eine Zunge aufweist, die zusammen mit dem in axialer Richtung und in Richtung seiner Längsachse verschiebbaren Zwischenstück in eine Nut am Ende der mit dem Getriebe verbundenen Schaltstange hineinragt, damit bei der Gangwahl beide Schaltstangen gemeinsam eine Drehbewegung ausführen können. Die Drehbewegung kann ebenfalls mittels eines in einem Längsschlitz verschiebbaren Stiftes oder eines Gleitsteines übertragen werden. Das Zwischenstück kann in axialer Richtung und in Richtung seiner Längsachse verschiebbar auf der Zunge der vom Schalthebel betätigten Schaltstange gelagert sein, und das quer zur Längsachse des Zwischenstückes verschiebbare Entkopplungselement kann mit Vertiefungen in der Zunge und/oder der Nut der Schaltstangen zur Herstellung einer formschlüssigen Verbindung zusammenwirken. Weiterhin kann das Zwischenstück eine Rasteinrichtung besitzen, die am Ende des Zwischenstückes zwischen den beiden Schaltstangen angeordnet ist und in Vertiefungen des die Enden der Schaltstangen umgebenden Rohrstückes einrastet.

Statt einer formschlüssigen Verbindung der beiden Schaltstangen im gekoppelten Zustand kann aber auch bei entsprechender Ausbildung des Entkopplungselementes und des Zwischenstückes eine kraftschlüssige Verbindung zur Anwendung kommen. In diesem Fall hat das mit dem die Enden der Schaltstangen umgebende Rohrstück zusammenwirkende Ende des Zwischenstückes einen Reibungsschluß mit der Innenfläche des Rohrstückes.

Weitere Merkmale und Vorteile der Erfindung können aus der Zeichnung und der zugehörigen Beschreibung entnommen werden. In der Zeichnung sind mehrere Ausführungsbeispiele gemäß der Erfindung dargestellt, und zwar zeigt:

Fig. 1 eine Entkopplungsvorrichtung deren Zwischenstück eine Rasteinrichtung und eine Kugel als Entkopplungselement aufweist, wobei sich die Kugel in Entkopplungsstelle befindet,

Fig. 2 eine andere Ausführungsform der Entkopplungsvorrichtung, deren Zwischenstück eine Reibungsfläche und eine Kugel für einen Reibschluß zwischen den beiden Schaltstangen besitzt und

Fig. 3 eine Abwandlung der Ausführungsform nach Fig. 2 mit einem Klemmkörper für den Reibschluß zwischen den beiden Schaltstangen.

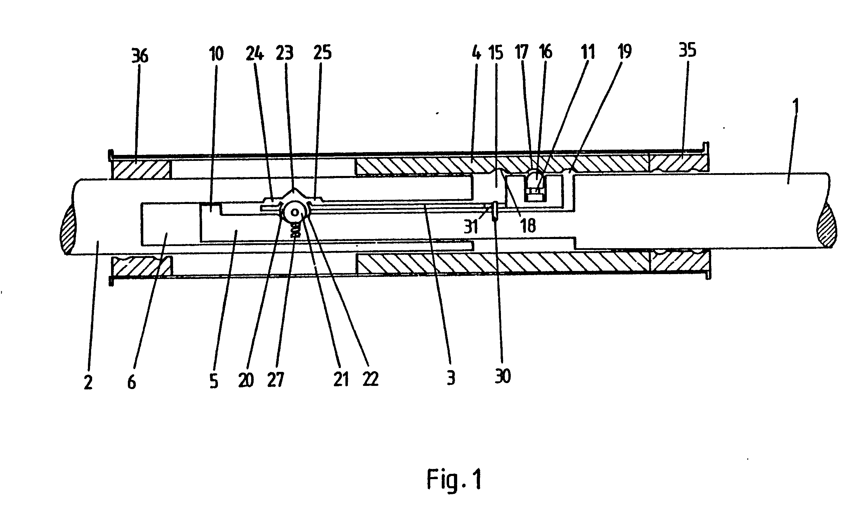

Die Entkopplungsvorrichtung nach Fig. 1 besteht aus der mit dem Schalthebel des Kraftfahrzeuges verbundenen Schaltstange 1, der mit dem Getriebe verbundenen Schaltstange 2, dem Zwischenstück 3 und dem Rohrstück 4. Die Schaltstange 1 besitzt an ihrem Ende eine Zunge 5, die in eine Nut 6 der Schaltstange 2 eingreift. Die Zunge 5 besitzt einen Ansatz 10, der an der Innenwand der Nut 6 anliegt und dafür sorgt, daß eine Drehbewegung der Schaltstange 1 sowohl im gekoppelten als auch im entkoppelten Zustand auf die Schaltstange 2 übertragen wird. Die Drehbewegung kann ebenfalls mittels eines in einem Längsschlitz verschiebbaren Stiftes oder eines Gleitsteines übertragen werden. Im Bereich der Nut 6 ist auf der Zunge 5 das Zwischenstück 3 verschiebbar gelagert. Das eine Ende des Zwischenstückes 3 ist mit einer Rasteinrichtung 11 versehen, die sich in einem Zwischenraum zwischen den beiden Schaltstangen 1 und 2 findet und deren Rastkörper 16 in an der Innenwand des Rohrstückes 4 befindlichen Vertiefungen 17, 18 und 19 einratet. Am anderen Ende des Zwischenstückes 3 sitzt in einer Ausnehmung 20 eine Kugel 21 oder eine Rolle, die mit Vertiefungen 22 und 23 in der Zunge 5 und der Nut 6 zusammenwirkt. Die Vertiefung 23 in der Nut 6 hat seitliche Erweiterungen 24 und 25, die eine Art Fangeinrichtung für die Kugel 21 bilden. Ein in die Zunge 5 eingesetzter Stift 30 greift in ein Langloch 31 des Zwischenstückes 3 ein, um gegebenenfalls eine zwangsweise Verbindung zwischen Schaltstange 1 und Zwischenstück 3 zu ermöglichen. An den Enden des Rohrstückes 4 sind Lagerringe 35 und 36 zur Lagerung der Schaltstangen 1 und 2 angeordnet.

Bei der Ganganwahl werden die Drehbewegungen durch die Zunge 5 und die Nut 6 zum Getriebe übertagen. Das Ein- und Ausschalten der Gänge erfolgt durch Verschieben der Schaltstange 1 in axialer Richtung. Die Kugel 21 tritt dabei, da das Zwischenstück 3 durch den Rastkörper 16 zunächst festgehalten wird, etwas aus der Vertiefung 22 heraus und gelangt in die Vertiefung 23, so daß die Schaltstangen 1 und 2 formschlüssig miteinander gekoppelt sind, und die Schaltstange 1 die Schaltstange 2 sowie das Zwischenstück 3 mitnimmt, dessen Rastkörper 16 je nach Schaltrichtung in die nächste Vertiefung 18 bzw. 19 im Rohrstück 4 einrastet. Der Abstand zwischen den Vertiefungen 17, 18 und 19 entspricht dem Schaltweg. Am Ende der Schaltbewegung sind die beiden Schaltstangen 1 und 2 wieder kräftefrei und die beiden Vertiefungen 22 und 23 liegen genau übereinander, so daß die Kugel 21 oder die Rolle durch die Schwerkraft oder zusätzlich durch die jeder 27 in die Vertiefung 22 gelangt und der entkoppelte Zustand nach Fig. 1 wieder hergestellt ist. Die Schaltstange 2 kann dann Hin- und Herbewegungen ausführen, ohne daß diese auf die Schaltstange 1 und den Schalthebel übertragen werden.

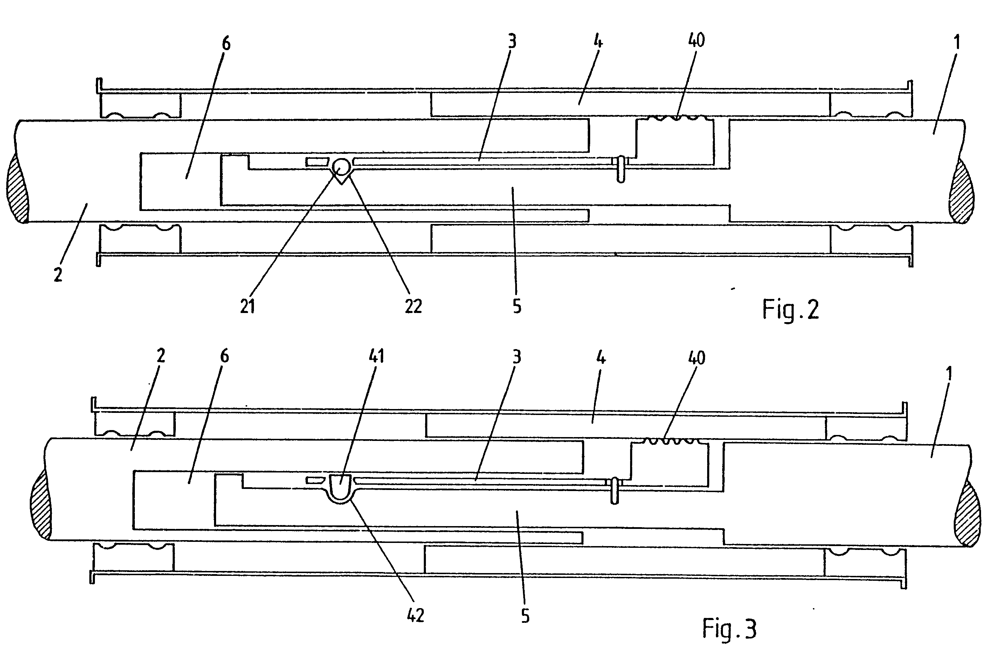

Die Ausführungsformen der Erfindung nach Fig. 2 und 3 unterscheiden sich von der Ausführungsform nach Fig. 1 im wesentlichen dadurch, daß beim Gangschalten statt einer formschlüssigen Verbindung eine kraftschlüssige Verbindung zwischen den beiden Schaltstangen 1 und 2 hergestellt wird. An die Stelle der Rasteinrichtung 11 des Zwischenstückes 3 tritt eine Reibungsfläche 40, die mit der Innenfläche des Rohrstückes 4 in Reibungsschluß steht. Durch den Fortfall der Vertiefung 23 steht die Kugel 21 mit der Innenwand der Nut 6 ebenfalls in Reibungsschluß, wenn sie beim Gangschalten aus der Vertiefung 21 herausgedrückt wird. Statt der Kugel oder der Rolle nach Fig. 2 kann auch ein Klemmkörper 41, wie dies in Fig. 3 der Fall ist, verwendet werden, dessen unteres abgerundetes Ende in eine abgerundete Vertiefung 42 eingreift.

Die Schaltstangen 1 und 2 mit der Zunge 5 und der Nut 6 und das Rohrstück 4 können in Fig. 1 auch symmetrisch ausgebildet sein, so daß zwei Zwischenstücke 3 mit Kugeln 21 gegenüberliegend als Kopplungsstellen wirken.

Die oben anhand der Zeichnung beschriebenen Konstruktionen stellen lediglich Ausführungsbeispiele dar, und die Erfindung ist in keiner Weise auf diese Beispiele beschränkt. Vielmehr gibt es mannigfaltige Abwandlungsmöglichkeiten in der Gestaltung und Anordnung der Einzelteile der Entkopplungsvorrichtung, ohne daß dabei der durch die Erfindung abgesteckte Rahmen verlassen wird.

**Patentansprüche**

1. Entkopplungsvorrichtung für Gestänge, insbesondere für das zwischen Getriebe und Schalthebel eines Kraftfahrzeuges angeordnete Schaltgestänge, mit einem senkrecht zur Längsachse des Gestänges bewegbaren Entkopplungselement (21, 41), das an den in einem Rohrstück (4) gelagerten, ineinandergreifenden Enden zweier drehbaren und axial verschiebbaren Schaltstangen (1, 2) angeordnet ist und eine Hin- und Herbewegung der entkoppelten Schaltstange (2) zuläßt, dadurch gekennzeichnet, daß zwischen den beiden drehfest miteinander verbundenen Enden der Schaltstangen (1, 2) ein den Entkopplungsvorgang steuerndes, in axialer Richtung sowie in Richtung seiner Längsachse verschiebbares und an seinem einen Ende mit der Innenfläche des Rohrstückes (4) zusammenwirkendes Zwischenstück (3) vorgesehen ist, in das das mit einer Vertiefung (22, 42) in der vom Schalthebel betätigten Schaltstange (1) zusammenwirkende Entkopplungselement (21, 41) eingesetzt ist, wobei das Entkopplungselement (21, 41) durch eine Bewegung quer zur Längsachse des Zwischenstückes (3) beim Verschieben der Schaltstange (1) aus dem entkoppelten Zustand in axialer Richtung und relativ zum Zwischenstück (3) eine Kopplung der Enden der beiden Schaltstangen (1, 2) in axialer Richtung bewirkt.

2. Entkopplungsvorrichtung nach Anspruch 1, dadurch gekennzeichnet, daß das Ende der vom Schalthebel betätigten Schaltstange (1) eine Zunge (5) aufweist, die zusammen mit dem in axialer Richtung und in Richtung seiner Längsachse verschiebbaren Zwischenstück (3) in eine Nut (6) am Ende der mit dem Getriebe verbundenen Schaltstange (2) hineinragt, damit bei der Gangwahl beide Schaltstangen (1, 2) gemeinsam eine Drehbewegung ausführen können.

3. Entkopplungsvorrichtung nach Anspruch 1 oder 2, dadurch gekennzeichnet, daß das Zwischenstück (3) in axialer Richtung und in Richtung seiner Längsachse verschiebbar auf der Zunge (5) der Schaltstange (1) gelagert ist und das quer zur Längsachse des Zwischenstückes (3) verschiebbare Entkopplungselement (21, 41 ) mit Vertiefungen (22, 23) in der Zunge (5) und/oder der Nut (6) der Schaltstangen (1, 2) zur Herstellung einer formschlüssigen Verbindung zusammenwirkt.

4. Entkopplungsvorrichtung nach Anspruch 1 bis 3, dadurch gekennzeichnet, daß die Vertiefung (22, 23) in der Zunge (5) und/oder der Nut (6) seitliche Erweiterungen (24, 25) besitzt, die eine Art Fangeinrichtung für das Entkopplungselement (21) bilden.

5. Entkopplungsvorrichtung nach Anspruch 1 bis 4, dadurch gekennzeichnet, daß das Zwischenstück (3) eine Rasteinrichtung (11) besitzt, die am Ende des Zwischenstückes (3) zwischen den beiden Schaltstangen (1, 2) angeordnet ist und in Vertiefungen (17, 18, 19) des die Enden der Schaltstangen (1, 2) umgebenden Rohrstückes (4) einrastet.

6. Entkopplungsvorrichtung nach Anspruch 1 bis 5, dadurch gekennzeichnet, daß der Abstand zwischen den Vertiefungen (17, 18 und 19) im Rohrstück (4) dem Schaltweg der Schaltstangen (1, 2) entspricht.

7. Entkopplungsvorrichtung nach Anspruch 1 bis 6, dadurch gekennzeichnet, daß ein in die Zunge (5) der mit dem Schalthebel verbundenen Schaltstange (1) eingesetzter Stift (30) in einen Längsschlitz (31) des Zwischenstückes (3) hineinragt, um eine zwangsweise Kopplung zwischen der Schaltstange (1) und dem Zwischenstück (3) zu ermöglichen.

8. Entkopplungsvorrichtung nach Anspruch 1 bis 7, dadurch gekennzeichnet, daß das Entkopplungselement als Kugel (21) oder Rolle ausgebildet ist.

9. Entkopplungsvorrichtung nach einem der Ansprüche 1 bis 8, dadurch gekennzeichnet, daß die Kopplung der beiden Schaltstangen (1, 2) kraftschlüssig erfolgt.

10. Entkopplungsvorrichtung nach Anspruch 9, dadurch gekennzeichnet, daß das mit dem die Enden der Schaltstangen (1, 2) umgebende Rohrstück (4) zusammenwirkende Ende des Zwischenstückes (3) einen Reibungsschluß mit der Innenfläche des Rohrstückes (4) hat.

11. Entkopplungsvorrichtung nach Anspruch 9 oder 10, dadurch gekennzeichnet, daß das Entkopplungselement als Klemmkörper (41) ausgebildet ist.

**Claims**

1. Uncoupling device for linkages, in particular for the gearshift linkage disposed between gearbox and gear lever of a motor vehicle, with an uncoupling element (21, 41) which is movable perpendicularly to the longitudinal axis of the linkage and which is disposed at the interengaging ends, mounted in a tubular piece (4), of two rotatable, axially slidable gear selector rods (1, 2) and allows reciprocation of the uncoupled gear selector rod (2), characterised in that between the two non-rotatably interconnected ends of the gear selector rods (1, 2) is provided an intermediate piece (3) which controls the uncoupling process, is slidable in an axis direction and in the direction of its longitudinal axis and cooperates at one end with the inner surface of the tubular piece (4), and in which is inserted the uncoupling element (21, 41) which cooperates with a recess (22, 42) in the gear selector rod (1) operated by the gear lever, wherein the uncoupling element (21, 41), due to a movement transversely to the longitudinal axis of the intermediate piece (3) during displacement of the gear selector rod (1) out of the uncoupled state in an axial direction and relative to the intermediate piece (3), effects coupling of the ends of the two gear selector rods (1, 2) in an axial direction.

2. Uncoupling device according to claim 1, characterised in that the end of the gear selector rod (1) operated by the gear lever comprises a lug (5) which, together with the intermediate piece (3) which is slidable in an axial direction and in the direction of its longitudinal axis, extends into a groove (6) at the end of the gear selector rod (2) connected to the gearbox, so that during gear selection the two gear selector rods (1, 2) together can perform a rotational movement.

3. Uncoupling device according to claim 1 or 2, characterised in that the intermediate piece (3) is mounted slidably in an axial direction and in the direction of its longitudinal axis on the lug (5) of the gear selector rod (1), and the uncoupling element (21, 41) which is slidable transversely to the longitudinal axis of the intermediate piece (3) cooperates with recesses (22, 23) in the lug (5) and/or the groove (6) of the gear selector rods (1, 2) to make a form-locking connection.

4. Uncoupling device according to claims 1 to 3, characterised in that the recess (22, 23) in the lug (5) and/or the groove (6) has lateral extensions (24, 25) which form a kind of trap for the uncoupling element (21).

5. Uncoupling device according to claims 1 to 4, characterised in that the intermediate piece (3) has a latching device (11) which is disposed at the end of the intermediate piece (3) between the two gear selector rods (1, 2) and latches in recesses (17, 18, 19) of the tubular piece (4) surrounding the ends of the gear selector rods (1, 2).

6. Uncoupling device according to claims 1 to 5, characterised in that the distance between the recesses (17, 18 and 19) in the tubular piece (4) corresponds to the distance of shifting of the gear selector rods (1, 2).

7. Uncoupling device according to claims 1 to 6, characterised in that a pin (30) inserted in the lug (5) of the gear selector rod (1) connected to the gear lever, extends into a longitudinal slot (31) of the intermediate piece (3) to allow positive coupling between the gear selector rod (1) and the intermediate piece (3).

8. Uncoupling device according to claims 1 to 7, characterised in that the uncoupling element is constructed as a ball (21) or roller.

9. Uncoupling device according to any of claims 1 to 8, characterised in that the two gear selector rods (1, 2) are coupled in force-locking relationship.

10. Uncoupling device according to claim 9, characterised in that the end of the intermediate piece (3) cooperating with the tubular piece (4) which surrounds the ends of the gear selector rods (1, 2) is frictionally locked to the inner surface of the tubular piece (4).

11. Uncoupling device according to claim 9 or 10, characterised in that the uncoupling element is constructed as a clamping body (41).

**Revendications**

1. Dispositif de découplage pour une timonerie, en particulier pour la timonerie de changement de vitesse placée entre la boîte de vitesses et le levier de vitesses d'un véhicule automobile, comprenant un élément de découplage (21, 41) qui peut être déplacé perpendiculairement à l'axe longitudinal de la timonerie, est placé sur les extrémités, montées dans une pièce tubulaire (4) et s'engageant l'une dans l'autre, de deux tringles de changement de vitesse (1, 2) rotatives et déplaçable axialement et autorise un mouvement de va-et-vient de la tringle de changement de vitesse (2) découplée, caractérisé en ce qu'il est prévu, entre les deux extrémités des tringles de changement de vitesse (1, 2), reliées l'une à l'autre de façon solidaire en rotation, une pièce intermédiaire (3) qui commande l'opération de découplage, qui peut être déplacée tant en direction axiale qu'en direction de son axe longitudinal, qui coopère à l'une de ses extrémités avec la surface intérieure de la pièce tubulaire (4) et dans laquelle est placé l'élément de découplage (21, 41) coopérant avec un creux (22, 42) ménagé dans la tringle de changement de vitesse (1) actionnée par le levier de vitesses, l'élément de découplage (21, 41) provoquant un couplage des extrémités des deux tringles de changement de vitesse (1, 2) en direction axiale, par un mouvement transversalement à l'axe longitudinal de la pièce intermédiaire (3), lors du déplacement de la tringle de changement de vitesse (1) à partir de la position de découplage, en direction axiale et relativement à la pièce intermédiaire (3).

2. Dispositif de découplage selon revendication 1, caractérisé en ce que l'extrémité de la tringle de changement de vitesse (1) actionnée par le levier de vitesses présente une languette (5) qui s'engage, avec la pièce intermédiaire (3) déplaçable en direction axiale et en direction de son axe longitudinal, dans une rainure (6) à l'extrémité de la tringle de changement de vitesse (2) reliée à la boîte de vitesses, afin que les deux tringles de changement de vitesse (1, 2) puissent exécuter ensemble un mouvement de rotation, lors de la sélection des vitesses.

3. Dispositif de découplage selon revendication 1 ou 2, caractérisé en ce que la pièce intermédiaire (3) est montée sur la languette (5) de la tringle de changement de vitesse (1) de manière à pouvoir être déplacée en direction axiale et en direction de son axe longitudinal et que l'élément de découplage (21, 41) déplaçable transversalement à l'axe longitudinal de la pièce intermédiaire (3) coopère avec des creux (22, 23) dans la languette (5) et/ou la rainure (6) des tringles de changement de vitesse (1, 2) pour l'établissement d'une liaison par complémentarité de formes.

4. Dispositif de découplage selon revendication 1 à 3, caractérisé en ce que le creux (22, 23) dans la languette (5) et/ou la rainure (6) possède des élargissements latéraux (24, 25) qui forment une sorte de dispositif d'interception pour l'élément de découplage (21).

5. Dispositif de découplage selon revendication 1 à 4, caractérisé en ce que la pièce intermédiaire (3) possède un dispositif d'arrêt (11) qui est situé à l'extrémité de la pièce intermédiaire (3) entre les deux tringles de changement de vitesse (1, 2) et se verrouille dans des creux (17, 18, 19) de la pièce tubulaire (4) entourant les extrémités des

**0 091 608**

tringles de changement de vitesse (1, 2).

6. Dispositif de découplage selon revendication 1 à 5, caractérisé en ce que la distance entre les creux (17, 18 et 19) dans la pièce tubulaire (4) correspond à la longueur de la course de sélection des vitesses des tringles de changement de vitesse (1, 2).

7. Dispositif de découplage selon revendication 1 à 6, caractérisé en ce qu'une cheville (30) placée dans la languette (5) de la tringle de changement de vitesse (1) reliée au levier de vitesses s'engage dans une fente longitudinale (31) de la pièce intermédiaire (3), afin de permettre un couplage forcé entre la tringle de changement de vitesse (1) et la pièce intermédiaire (3).

8. Dispositif de découplage selon revendication 1 à 7, caractérisé en ce que l'élément de découplage est réalisé sous forme de bille (21) ou de galet.

9. Dispositif de découplage selon l'une des revendications 1 à 8, caractérisé en ce que le couplage des deux tringles de changement de vitesse (1, 2) s'effectue par frottement.

10. Dispositif de découplage selon la revendication 9, caractérisé en ce que l'extrémité de la pièce intermédiaire (3) qui coopère avec la pièce tubulaire (4) entourant l'extrémité des tringles de changement de vitesse (1, 2) se trouve en liaison par frottement avec la surface intérieure de la pièce tubulaire (4).

11. Dispositif de découplage selon la revendication 9 ou 10, caractérisé en ce que l'élément de découplage est réalisé sous forme de corps de serrage ou de coincement (41).

Fig. 1

0 091 608

Fig. 2

Fig. 3

0 091 608